(19) Europäisches Patentamt

European Patent Office

Office européen des brevets

(11) **EP 1 904 869 B1**

(12) **FASCICULE DE BREVET EUROPEEN**

(45) Date de publication et mention de la délivrance du brevet:
**28.03.2012 Bulletin 2012/13**

(21) Numéro de dépôt: **06778862.0**

(22) Date de dépôt: **12.07.2006**

(51) Int Cl.:
*G01C 21/28* (2006.01)   *G01C 21/16* (2006.01)
*G01S 19/49* (2010.01)

(86) Numéro de dépôt international:
**PCT/FR2006/001692**

(87) Numéro de publication internationale:
**WO 2007/010116 (25.01.2007 Gazette 2007/04)**

(54) **PROCEDE ET DISPOSITIF POUR DETERMINER LA POSITION AU SOL D'UN MOBILE, EN PARTICULIER D'UN AVION SUR UN AEROPORT**

VERFAHREN UND EINRICHTUNG ZUR BESTIMMUNG DER BODENPOSITION EINES MOBILEN OBJEKTS INSBESONDERE EINES FLUGZEUGS AN EINEM FLUGHAFEN

METHOD AND DEVICE FOR DETERMINING THE GROUND POSITION OF A MOBILE OBJECT, IN PARTICULAR AN AIRCRAFT ON AN AIRPORT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.07.2005 FR 0507567**

(43) Date de publication de la demande:
**02.04.2008 Bulletin 2008/14**

(73) Titulaire: **AIRBUS OPERATIONS (SAS)**
**31060 Toulouse (FR)**

(72) Inventeurs:
• **FETZMANN, Fabien**
**F-31270 Cugnaux (FR)**
• **COLDEFY, Pierre**
**F-31300 Toulouse (FR)**
• **MALAVAL, Thierry**
**F-31200 Toulouse (FR)**
• **COLLINS, Stéphane**
**F-31000 Toulouse (FR)**

(74) Mandataire: **Hauer, Bernard**
**Gevers France**
**23bis, rue de Turin**
**75008 Paris (FR)**

(56) Documents cités:
**US-A- 5 541 845        US-A1- 2004 006 424**
**US-A1- 2004 107 072    US-A1- 2004 239 560**

• **SOHNE W ET AL: "Integrated INS/GPS system for high precision navigation applications" POSITION LOCATION AND NAVIGATION SYMPOSIUM, 1994., IEEE LAS VEGAS, NV, USA 11-15 APRIL 1994, NEW YORK, NY, USA,IEEE, 11 avril 1994 (1994-04-11), pages 310-313, XP010117747 ISBN: 0-7803-1435-2**
• **HOHMAN D ET AL: "GPS roadside integrated precision positioning system" IEEE, 13 mars 2000 (2000-03-13), pages 221-230, XP010376939**

EP 1 904 869 B1

**Description**

La présente invention concerne un procédé et un dispositif pour déterminer la position au sol d'un mobile, en particulier d'un avion sur un aéroport.

Dans le cadre d'une fonction de navigation aéroportuaire (qui permet d'afficher sur un écran du poste de pilotage d'un avion une carte d'aéroport sur laquelle est indiquée la position courante de l'avion), il est nécessaire de connaître la position exacte de l'avion lorsqu'il se trouve sur le sol. La précision et le taux de rafraîchissement de cette position sont des paramètres déterminants pour assurer la crédibilité de l'information affichée, par rapport aux repères extérieurs visibles par le pilote de l'avion. La disponibilité de cette position, avec les performances adéquates, doit être garantie pour toutes les surfaces aéroportuaires susceptibles d'accueillir des avions équipés d'un tel dispositif, ce qui suppose que la détermination de la position soit réalisée sans reposer uniquement sur l'utilisation d'éventuels équipements disponibles au sol pour améliorer le calcul, étant donné que de tels équipements ne sont pas prévus sur tous les aéroports.

Pour déterminer la position de l'avion, on utilise généralement un ensemble de réception qui est associé à un système de positionnement par satellites, notamment de type GPS ("Global Positioning System" en anglais), par exemple Navstar, Galileo, GNSS, GLONASS. Cet ensemble de réception comporte de façon usuelle une antenne de réception qui est montée sur le toit de l'avion, ainsi qu'un récepteur qui est relié à cette antenne et qui engendre des données de position de l'avion, à partir de signaux détectés par ladite antenne. Toutefois, un tel ensemble de positionnement délivre les données de position, c'est-à-dire une information sur la position de l'avion, pour les besoins de la navigation en vol uniquement toutes les secondes, ce qui est insuffisant pour les besoins en navigation aéroportuaire, puisqu'une telle fréquence de délivrance ne permet pas de restituer de façon satisfaisante les déplacements de l'avion.

Par ailleurs, par un article de W. Sôhne et al, intitulé « Integrated INS/GPS System for High Precision Navigation Applications » et divulgué lors du « Position location and navigation Symposium », 1994 IEEE, pages 310 à 313, on connaît un procédé pour déterminer la position au sol d'un mobile. Selon ce procédé, on réalise les opérations suivantes :

A/ à chaque émission de données de position, on utilise ces données de position pour déterminer la position du mobile ; et

B/ entre deux émissions successives de données de position, on prend en compte lesdites données inertielles, et :

- on divise l'espace de temps entre ces deux émissions successives en une pluralité de plages temporelles de même durée, délimitées par des temps intermédiaires ;
- à chacun desdits temps intermédiaires, on détermine une vitesse inertielle du mobile à partir des données inertielles correspondantes ; et
- pour chaque temps intermédiaire, on détermine la position du mobile, à l'aide desdites données inertielles.

La présente invention a pour objet de remédier aux inconvénients précités. Elle concerne un procédé pour déterminer, de façon précise et avec un taux de rafraîchissement élevé, la position au sol d'un mobile quelconque, et en particulier d'un avion qui est situé sur un aéroport.

A cet effet, selon l'invention, ledit procédé selon lequel on utilise des données de position émises de façon périodique ainsi que des données inertielles, est remarquable en ce que :

A/ à chaque émission de données de position, on utilise ces données de position pour déterminer la position du mobile ; et

B/ entre deux émissions successives de données de position, on prend en compte lesdites données inertielles, et :

a) on divise l'espace de temps entre ces deux émissions successives en une pluralité de plages temporelles de même durée, délimitées par des temps intermédiaires ;

b) à chacun desdits temps intermédiaires, on détermine une vitesse inertielle du mobile à partir des données inertielles correspondantes ;

c) pour chaque plage temporelle, on calcule la moyenne des vitesses inertielles des deux temps intermédiaires délimitant cette plage temporelle, et on en déduit le déplacement au sol du mobile durant ladite plage temporelle ; et

d) pour chaque temps intermédiaire, on détermine la position du mobile, à partir de sa position au temps intermédiaire précédent et à partir de son déplacement durant la plage temporelle délimitée par ces deux temps intermédiaires correspondants, courant et précédent.

Ainsi, grâce à l'invention, on détermine la position du mobile à une fréquence qui est plus élevée que la fréquence d'émission des données de position, ce qui permet notamment de satisfaire le besoin d'un taux de rafraîchissement élevé de la position d'un avion dans le cadre d'une navigation aéroportuaire.

La présente invention tient compte du fait que les données de position (qui sont de préférence des données engendrées par un récepteur qui est monté sur le mobile et qui coopère avec un système usuel de positionnement par satellites, par exemple de type GPS, sont les données disponibles qui sont les plus précises. Aussi, on utilise ces données de position pour déterminer la position du mobile à chaque fois qu'elles sont émises (étape A/). De plus, pour obtenir des informations sur la position du mobile entre deux émissions successives de telles données de position, on prend en compte les données inertielles qui sont de préférence des données engendrées par une centrale inertielle dudit mobile (étape B/). La position du mobile obtenue à partir desdites données inertielles est certes moins précise (en général) que celle obtenue à partir des données de position, mais elle est émise à une fréquence beaucoup plus élevée et permet donc de combler l'absence d'informations entre deux émissions de données de position.

La présente invention s'applique à tout type de mobile se déplaçant sur le sol et comportant des moyens de type quelconque qui sont susceptibles d'engendrer des données de position et des données inertielles.

Selon l'invention, pour corriger une éventuelle erreur due à une dérive lente d'une centrale inertielle utilisée pour engendrer les données inertielles, aux étapes B/c) et B/d), on détermine la position du mobile à l'aide des expressions suivantes :

$$\begin{cases} x_{i+1} = x_i + \left[ (vx_{i+1} + vx_i).dt \right]/2 \\ y_{i+1} = y_i + \left[ (vy_{i+1} + vy_i).dt \right]/2 \\ vx_{i+1} = vx_i + (Vx_{i+1} - Vx_i) \\ vy_{i+1} = vy_i + (Vy_{i+1} - Vy_i) \end{cases}$$

dans lesquelles, en plus des paramètres précités, $vx_i$ et $vy_i$ sont des vitesses calculées qui sont recalées sur la vitesse d'une antenne de réception associée au récepteur précité et utilisée pour engendrer les données de position, à chaque émission desdites données de position.

De préférence, lesdites données inertielles correspondent directement à des vitesses inertielles. Toutefois, dans un mode de réalisation particulier, lesdites données inertielles peuvent également correspondre à des accélérations qui sont utilisées pour déterminer lesdites vitesses inertielles. Ceci permet notamment d'augmenter la fréquence de calcul de la position du mobile, puisque les accélérations sont délivrées à une fréquence plus élevée que les vitesses inertielles. Dans ce cas, les accélérations sont utilisées pour effectuer une extrapolation inertielle entre deux informations successives de vitesse inertielle.

Dans un mode de réalisation particulier, à chaque émission de données de position :

- on détermine une première position du mobile, à partir des données inertielles, conformément à l'étape B/ précitée ;
- on calcule l'écart entre cette première position et une seconde position obtenue à l'aide desdites données de position émises ; et
- on utilise comme position du mobile :

  ■ ladite première position, si l'écart ainsi calculé est supérieur ou égal à une première valeur prédéterminée et est inférieur à une seconde valeur prédéterminée ; et
  ■ ladite seconde position, si ledit écart est inférieur à ladite première valeur prédéterminée.

Ce dernier mode de réalisation permet de surveiller et le cas échéant de filtrer d'éventuelles erreurs de données de position de durée limitée (limite prédéterminée).

En outre, avantageusement, à une étape C/ suivante, on affiche sur un écran de visualisation une carte illustrant l'environnement du mobile (par exemple une carte d'aéroport), qui est munie d'un symbole indiquant la position dudit mobile telle que déterminée aux étapes A/ et B/d).

Dans ce cas, avantageusement :

- on collecte des informations de précision concernant la précision desdites données de position ;
- on détermine une erreur potentielle de position du mobile, à partir de ces informations de précision ; et
- on met en évidence sur ladite carte, autour dudit symbole, une zone illustrant ladite erreur potentielle de position du mobile.

La présente invention concerne également un dispositif embarqué pour déterminer la position au sol d'un mobile quelconque, en particulier d'un avion se déplaçant sur un aéroport.
Selon l'invention, ledit dispositif du type comportant :

- des premiers moyens pour émettre de façon périodique des données de position ; et
- des deuxièmes moyens pour émettre des données inertielles, est remarquable en ce qu'il comporte, de plus :
- des troisièmes moyens pour déterminer la position du mobile à chaque émission de données de position, à partir desdites données de position ; et
- des quatrièmes moyens pour déterminer la position du mobile à partir des données inertielles, entre deux émissions successives de données de position, l'espace de temps entre deux émissions successives étant divisé en une pluralité de plages temporelles de même durée séparées par des temps intermédiaires, lesdits quatrièmes moyens comprenant :

   ■ des moyens pour déterminer, à chacun desdits temps intermédiaires, une vitesse inertielle à partir des données inertielles correspondantes ;
   ■ des moyens calculant, pour chaque plage temporelle, la moyenne des vitesses inertielles des deux temps intermédiaires délimitant cette plage temporelle et en déduisant le déplacement au sol du mobile durant ladite plage temporelle correspondante ; et
   ■ des moyens pour déterminer, pour chaque temps intermédiaire, la position du mobile, à partir de sa position au temps intermédiaire précédent et à partir de son déplacement durant la plage temporelle

   délimitée par ces deux temps intermédiaires correspondants, courant et précédent.

Dans un mode de réalisation particulier, le dispositif conforme à l'invention comporte, de plus, des cinquièmes moyens pour présenter, sur un écran de visualisation, une carte qui illustre l'environnement du mobile et qui est munie d'un symbole indiquant la position du mobile, telle que déterminée par lesdits troisième et quatrième moyens.
En outre, de façon avantageuse :

- lesdits premiers moyens comportent un récepteur (associé à une antenne) qui est monté sur le mobile et qui coopère avec un système usuel de positionnement par satellites ; et/ou
- lesdits deuxièmes moyens comportent au moins une centrale inertielle dudit mobile.

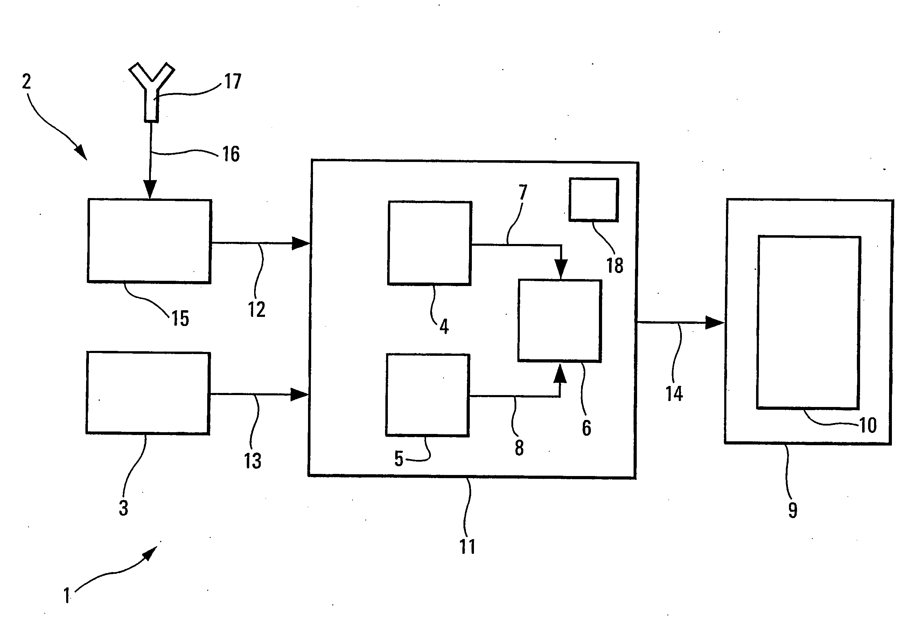

L'unique figure du dessin annexé fera bien comprendre comment l'invention peut être réalisée. Cette figure unique est le schéma synoptique d'un dispositif conforme à l'invention.
Le dispositif 1 conforme à l'invention et représenté schématiquement sur la figure est embarqué sur un mobile (non représenté), en particulier un avion, qui se déplace sur le sol, et il est destiné à déterminer la position courante au sol dudit mobile, par exemple la position sur un aéroport dans le cas d'un avion.
Pour ce faire, ledit dispositif 1 est du type comportant :

- des moyens 2 précisés ci-dessous, pour émettre de façon périodique des données de position ; et
- des moyens 3, également précisés ci-dessous, pour émettre (en général également de façon périodique) des données inertielles du mobile.

Selon l'invention, ledit dispositif 1 comporte, de plus :

- des moyens 4 pour déterminer de façon usuelle la position du mobile à partir de données de position reçues, et ceci à chaque émission par lesdits moyens 2 de telles données de position. Lesdites données de position sont émises par exemple toutes les secondes ; et
- des moyens 5 pour déterminer la position du mobile à partir de données inertielles émises par lesdits moyens 3, et ceci entre deux émissions successives de données de position. Pour ce faire, l'espace de temps Tc entre deux émissions successives de données de position est divisé en une pluralité de plages temporelles $\Delta T$ (par exemple en dix plages temporelles) de même durée, séparées par des temps intermédiaires $T_i$, i étant un entier.

A cet effet, lesdits moyens 5 comprennent les moyens intégrés suivants :

■ des moyens pour déterminer, à chacun desdits temps intermédiaires $T_i$, une vitesse inertielle à partir des données inertielles correspondant audit temps intermédiaire ;
■ des moyens calculant, pour chaque plage temporelle $\Delta T$, la moyenne des vitesses inertielles des deux temps intermédiaires délimitant cette plage temporelle, et en déduisant le déplacement au sol du mobile durant cette plage temporelle ΔT ; et

■ des moyens pour déterminer, pour chaque temps intermédiaire courant ($T_i$ par exemple), la position du mobile, à partir de sa position au temps intermédiaire précédent ($T_{i-1}$ par exemple) et à partir de son déplacement durant la plage temporelle délimitée par ces deux temps intermédiaires, courant et précédent (par exemple $T_i$ et $T_{i-1}$ pour le temps intermédiaire courant $T_i$).

Ces différents calculs sont réalisés dans un plan horizontal représentant le sol de sorte que chaque paramètre de position et de vitesse comprend deux coordonnées.

Ledit dispositif 1 comporte, de plus, des moyens 6 qui sont reliés par l'intermédiaire de liaisons 7 et 8 respectivement auxdits moyens 4 et 5, et qui reçoivent les positions déterminées par ces moyens 4 et 5 et les mettent en forme, le cas échéant, avant de les transmettre à des moyens d'affichage 9.

Ces moyens d'affichage 9 comprennent au moins un écran de visualisation 10 usuel et sont formés de manière à présenter sur cet écran de visualisation 10 une carte non représentée, qui illustre l'environnement du mobile et qui est munie d'un symbole indiquant la position courante du mobile, telle que transmise par lesdits moyens 6. Cette position courante est mise à jour de façon périodique sur l'écran de visualisation 10 à chaque nouvelle génération d'une valeur de position courante.

Dans l'exemple d'un avion, ladite carte peut être une carte d'aéroport montrant au moins une partie de l'aéroport sur laquelle se situe et éventuellement se déplace l'avion, et ledit symbole est un symbole illustrant la position dudit avion sur ledit aéroport.

Dans un mode de réalisation particulier, lesdits moyens 4, 5 et 6 sont regroupés dans une unité centrale 11 qui est reliée par l'intermédiaire de liaisons 12, 13 et 14 respectivement auxdits moyens 2, auxdits moyens 3 et auxdits moyens d'affichage 9.

En outre, dans un mode de réalisation particulier :

- lesdits moyens 2 comportent un récepteur usuel 15 qui est relié par l'intermédiaire d'une liaison 16 à une antenne 17 disposée sur le mobile, par exemple sur le toit d'un avion, qui coopère avec un système usuel de positionnement par satellites, de préférence de type GPS (par exemple Navstar, Galileo, GNSS, GLONASS), et qui fournit de façon périodique (généralement toutes les secondes pour les besoins de la navigation en vol), des données de position. Ces données de position permettent aux moyens 4 d'en déduire (périodiquement) de façon usuelle la position courante du mobile ; et/ou

- lesdits moyens 3 comportent au moins une centrale inertielle usuelle dudit mobile.

Ainsi, le dispositif 1 conforme à l'invention détermine la position du mobile à une fréquence qui est plus élevée que la fréquence d'émission (par les moyens 2) des données de position, ce qui permet notamment de satisfaire le besoin d'un taux de rafraîchissement élevé de la position d'un avion dans le cadre d'une navigation aéroportuaire.

La présente invention tient compte du fait que les données de position (qui sont des données engendrées par le récepteur 1 5 des moyens 2 qui coopèrent avec un système usuel de positionnement par satellites) sont les données disponibles utilisées qui sont les plus précises. Aussi, le dispositif 1 prend en compte ces données de position (par l'intermédiaire des moyens 4) pour déterminer la position du mobile à chaque fois qu'elles sont émises. De plus, pour obtenir des informations sur la position du mobile entre deux émissions successives de telles données de position, ledit dispositif 1 prend en compte (par l'intermédiaire des moyens 5) les données inertielles engendrées par les moyens 3. La position du mobile obtenue à partir desdites données inertielles est certes moins précise (en général) que celle obtenue à partir des données de position, mais elle est émise à une fréquence beaucoup plus élevée et permet donc de combler l'absence d'informations entre deux émissions de données de position.

La présente invention s'applique à tout type de mobile se déplaçant sur le sol et comportant des moyens 2, 3 (de type quelconque) qui sont susceptibles d'engendrer des données de position et des données inertielles. Toutefois, une application préférée concerne une aide à la navigation aéroportuaire d'un avion, du type précité.

Dans un premier mode de réalisation simplifié, lesdits moyens 5 déterminent la position du mobile à l'aide des expressions suivantes :

$$\begin{cases} x_{i+1} = x_i + \left[ (Vx_{i+1} + Vx_i).dt \right] / 2 \\ y_{i+1} = y_i + \left[ (Vy_{i+1} + Vy_i).dt \right] / 2 \end{cases}$$

dans lesquelles :

- $X_{i+1}$ et $Y_{i+1}$ sont les coordonnées dans un plan horizontal de ladite position du mobile à un temps intermédiaire $t_{i+1}$ courant ;
- $x_i$ et $y_i$ sont les coordonnées dans le plan horizontal de ladite position du mobile à un temps intermédiaire $t_i$ précédent ;
- $Vx_{i+1}$ et $Vy_{i+1}$ sont les coordonnées dans le plan horizontal de la vitesse inertielle du mobile au temps intermédiaire $t_{i+1}$ ;
- $Vx_i$ et $Vy_i$ sont les coordonnées dans le plan horizontal de la vitesse inertielle du mobile au temps intermédiaire $t_i$ ; et
- dt est la durée de la plage temporelle $\Delta t$.

Pour améliorer la prise en compte du déplacement du mobile sur chaque plage temporelle $\Delta t$ et tenir compte de l'échantillonnage, les moyens 5 effectuent donc une moyenne arithmétique sur deux valeurs de vitesse inertielle prises au début et à la fin de cette plage temporelle $\Delta t$.

On sait que les vitesses inertielles peuvent être entachées d'une erreur due, le cas échéant, à la dérive lente d'une centrale inertielle 3. Cette erreur est absolue (c'est-à-dire elle correspond à une composante continue). Aussi, pour essayer de s'affranchir d'une telle erreur, lesdits moyens 5 déterminent la position du mobile à l'aide des expressions suivantes :

$$
\begin{cases}
x_{i+1} = x_i + [(vx_{i+1} + vx_i).dt]/2 \\
y_{i+1} = y_i + [(vy_{i+1} + vy_i).dt]/2 \\
vx_{i+1} = vx_i + (Vx_{i+1} - Vx_i) \\
vy_{i+1} = vy_i + (Vy_{i+1} - Vy_i)
\end{cases}
$$

dans lesquelles, en plus des paramètres précités, $vx_i$ et $vy_i$ sont des vitesses calculées qui sont recalées sur la vitesse de l'antenne de réception 17 associée au récepteur 1 5 desdits moyens 2 qui sont utilisés pour engendrer les données de position. Ce recalage est réalisé à chaque émission desdites données de position.

De préférence, lesdites données inertielles correspondent directement à des vitesses inertielles Vx et Vy, ce qui simplifie le calcul de la position du mobile à l'aide des expressions précédentes. Toutefois, dans un mode de réalisation particulier, lesdites données inertielles peuvent également correspondre à des accélérations qui sont utilisées pour déterminer lesdites vitesses inertielles Vx et Vy. Ceci permet notamment d'augmenter la fréquence de calcul de la position du mobile, puisque de façon usuelle les accélérations sont délivrées (généralement toutes les 20 ms) à une fréquence plus élevée que les vitesses inertielles (délivrées généralement toutes les 100 ms). Dans ce cas, les accélérations sont utilisées pour effectuer une extrapolation inertielle entre deux informations successives de la vitesse inertielle, qui sert de référence à son tour pour le recalage de ce sous-algorithme. Le reste de l'algorithme reste inchangé.

Dans un mode de réalisation particulier, à chaque émission de données de position :

- lesdits moyens 5 déterminent une première position du mobile à l'aide des données de position et des données inertielles, de la manière précitée ;
- les moyens 4 déterminent, comme indiqué précédemment, une seconde position du mobile à partir desdites données de position reçues des moyens 2 ; et
- lesdits moyens 6 calculent l'écart entre ces première et seconde positions, et en déduisent que la position du mobile (choisie et utilisée pour l'affichage) correspond à :

   ■ ladite première position, si l'écart ainsi calculé est supérieur ou égal à une première valeur prédéterminée (et est inférieur à une seconde valeur prédéterminée) ; et
   ■ ladite seconde position, si ledit écart est inférieur à ladite première valeur prédéterminée.

Ce dernier mode de réalisation permet de surveiller et, le cas échéant, de filtrer d'éventuelles erreurs de données de position, de durée limitée (limite prédéterminée).

On sait que dans le cas de moyens 2 de type GPS, le récepteur 15 est susceptible de fournir des valeurs usuelles HDOP, HFOM et HIL qui représentent des informations de précision et donnent des indications en temps réel sur la qualité des informations de localisation (données de position) émises. Aussi, le dispositif 1 conforme à l'invention comporte, de plus, des moyens 18 qui sont par exemple intégrés dans l'unité centrale 11 et qui reçoivent des informations de précision du type précité et déterminent une erreur potentielle de position du mobile à partir de ces informations de précision, en les combinant avec la précision connue des données cartographiques utilisées par les moyens d'affichage 9. Lesdits moyens 18 peuvent transmettre cette erreur potentielle auxdits moyens d'affichage 9 pour qu'ils mettent en évidence sur ladite carte, autour du symbole illustrant la position courante du mobile, une zone qui illustre ladite erreur potentielle du mobile, c'est-à-dire une zone dans laquelle le mobile se trouve avec une certaine probabilité.

Connaissant l'échelle courante utilisée par les moyens d'affichage 9, la projection utilisée pour la représentation de la carte et les caractéristiques de l'écran 10, il est possible d'en déduire une erreur potentielle d'affichage sur l'écran 10 (en pixels) avec une certaine probabilité. En fonction de l'erreur (et éventuellement de sa probabilité associée), on peut prévoir des moyens (non représentés) pour prévenir le pilote (par exemple sous forme d'alertes sonores et/ou visuelles) d'un risque d'incohérence entre la précision de la position du mobile et le détail de la carte. Ces alertes peuvent aller du simple message adressé au pilote à l'interdiction d'utiliser certaines échelles d'affichage pour les moyens d'affichage 9.

**Revendications**

1. Procédé pour déterminer la position au sol d'un mobile, procédé selon lequel on utilise des données de position émises de façon périodique ainsi que des données inertielles, procédé selon lequel :

   A/ à chaque émission de données de position, on utilise ces données de position pour déterminer la position du mobile ; et
   B/ entre deux émissions successives de données de position, on prend en compte lesdites données inertielles, et :

      a) on divise l'espace de temps entre ces deux émissions successives en une pluralité de plages temporelles de même durée, délimitées par des temps intermédiaires ;
      b) à chacun desdits temps intermédiaires, on détermine une vitesse inertielle du mobile à partir des données inertielles correspondantes ; et
      d) pour chaque temps intermédiaire, on détermine la position du mobile, à l'aide desdites données inertielles, **caractérisé en ce que** :

         - on réalise de plus les opérations suivantes :

      B/ c) pour chaque plage temporelle, on calcule la moyenne des vitesses inertielles des deux temps intermédiaires délimitant cette plage temporelle, et on en déduit le déplacement au sol du mobile durant ladite plage temporelle ;

         - à l'étape d), pour chaque temps intermédiaire, on détermine la position du mobile, à partir de sa position au temps intermédiaire précédent et à partir de son déplacement durant la plage temporelle délimitée par ces deux temps intermédiaires correspondants, courant et précédent ; et
         - aux étapes B/c) et B/d), on détermine la position du mobile, à l'aide des expressions suivantes :

$$
\left\{
\begin{array}{l}
x_{i+1} = x_i + \left[(vx_{i+1} + vx_i).dt\right]/2 \\[2mm]
y_{i+1} = y_i + \left[(vy_{i+1} + vy_i).dt\right]/2 \\[2mm]
vx_{i+1} = vx_i + (Vx_{i+1} - Vx_i) \\[2mm]
vy_{i+1} = vy_i + (Vy_{i+1} - Vy_i)
\end{array}
\right.
$$

      dans lesquelles :
      - $x_{i+1}$ et $y_{i+1}$ sont les coordonnées dans un plan horizontal de ladite position du mobile à un temps intermédiaire $t_{i+1}$ ;
      - $x_i$ et $y_i$ sont les coordonnées dans le plan horizontal de ladite position du mobile à un temps intermédiaire $t_i$ précédent ;
      - $Vx_{i+1}$ et $Vy_{i+1}$ sont les coordonnées dans le plan horizontal de la vitesse inertielle du mobile au temps intermédiaire $t_{i+1}$ ;

- Vx et Vy sont les coordonnées dans le plan horizontal de la vitesse inertielle du mobile au temps intermédiaire $t_i$ ;
- dt est la durée de la plage temporelle ; et
- $vx_i$ et $vy_i$ sont des vitesses calculées qui sont recalées sur la vitesse d'une antenne de réception (17) utilisée pour engendrer les données de position, à chaque émission desdites données de position.

2. Procédé selon la revendication 1,
**caractérisé en ce que** lesdites données inertielles correspondent directement à des vitesses inertielles.

3. Procédé selon la revendications 1,
**caractérisé en ce que** lesdites données inertielles correspondent à des accélérations permettant de déterminer lesdites vitesses inertielles.

4. Procédé selon l'une quelconque des revendications précédentes, **caractérisé en ce qu'**à chaque émission de données de position :

- on détermine une première position du mobile, à partir des données inertielles, conformément à l'étape B/ ;
- on calcule l'écart entre cette première position et une seconde position obtenue à l'aide desdites données de position émises ; et
- on utilise comme position du mobile :

  • ladite première position, si l'écart ainsi calculé est supérieur ou égal à une première valeur prédéterminée et est inférieur à une seconde valeur prédéterminée ; et
  • ladite seconde position, si ledit écart est inférieur à ladite première valeur prédéterminée.

5. Procédé selon l'une quelconque des revendications précédentes, **caractérisé en ce qu'**à une étape C/ suivante, on affiche sur un écran de visualisation (10) une carte illustrant l'environnement du mobile, qui est munie d'un symbole indiquant la position dudit mobile telle que déterminée aux étapes A/ et B/d).

6. Procédé selon la revendication 5,
**caractérisé en ce que** :

- on collecte des informations de précision concernant la précision desdites données de position ;
- on détermine une erreur potentielle de position du mobile, à partir de ces informations de précision ; et
- on met en évidence sur ladite carte, autour dudit symbole, une zone illustrant ladite erreur potentielle de position du mobile.

7. Procédé selon l'une quelconque des revendications précédentes, **caractérisé en ce que** lesdites données de position sont des données engendrées par un récepteur (15) qui est monté sur le mobile et qui coopère avec un système de positionnement par satellites.

8. Procédé selon l'une quelconque des revendications précédentes, **caractérisé en ce que** lesdites données inertielles sont des données engendrées par une centrale inertielle (3) du mobile.

9. Dispositif embarqué pour déterminer la position au sol d'un mobile, ledit dispositif (1) comportant :

- des premiers moyens (2) pour émettre de façon périodique des données de position ;
- des deuxièmes moyens (3) pour émettre des données inertielles ;
- des troisièmes moyens (4) pour déterminer la position du mobile à chaque émission de données de position, à partir desdites données de position ; et
- des quatrièmes moyens (5) pour déterminer la position du mobile à partir des données inertielles entre deux émissions successives de données de position, l'espace de temps entre deux émissions successives étant divisé en une pluralité de plages temporelles de même durée séparées par des temps intermédiaires, lesdits quatrièmes moyens (5) comprenant des moyens pour déterminer, à chacun desdits temps intermédiaires, une vitesse inertielle à partir des données inertielles correspondantes, **caractérisé en ce que** lesdits quatrièmes moyens (5) comprennent de plus :
- des moyens pour calculer, pour chaque plage temporelle, la moyenne des vitesses inertielles des deux temps intermédiaires délimitant cette plage temporelle et pour en déduire le déplacement au sol du mobile durant ladite plage temporelle correspondante ; et
- des moyens pour déterminer, pour chaque temps intermédiaire, la position du mobile, à partir de sa position au temps intermédiaire précédent et à partir de son déplacement durant la plage temporelle délimitée par ces deux temps intermédiaires correspondants, courant et précédent, à l'aide des expressions suivantes :

$$\begin{cases} x_{i+1} = x_i + \left[(vx_{i+1} + vx_i).dt\right]/2 \\ y_{i+1} = y_i + \left[(vy_{i+1} + vy_i).dt\right]/2 \\ vx_{i+1} = vx_i + (Vx_{i+1} - Vx_i) \\ vy_{i+1} = vy_i + (Vy_{i+1} - Vy_i) \end{cases}$$

dans lesquelles :
- $x_{i+1}$ et $y_{i+1}$ sont les coordonnées dans un plan horizontal de ladite position du mobile à un temps intermédiaire $t_{i+1}$ ;
- $x_i$ et $y_i$ sont les coordonnées dans le plan horizontal de ladite position du mobile à un temps intermédiaire $t_i$ précédent ;
- $Vx_{i+1}$ et $Vy_{i+1}$ sont les coordonnées dans le plan horizontal de la vitesse inertielle du mobile au temps inter-médiaire $t_{i+1}$ ;
- $Vx$ et $Vy$ sont les coordonnées dans le plan horizontal de la vitesse inertielle du mobile au temps intermédiaire $t_i$ ;
- dt est la durée de la plage temporelle ; et
- $vx_i$ et $vy_i$ sont des vitesses calculées qui sont recalées sur la vitesse d'une antenne de réception (17) utilisée pour engendrer les données de position, à chaque émission desdites données de position.

10. Dispositif selon la revendication 9,
**caractérisé en ce qu'**il comporte, de plus, des cinquièmes moyens (9) pour présenter, sur un écran de visualisation (10), une carte qui illustre l'environnement du mobile et qui est munie d'un symbole indiquant la position du mobile, telle que déterminée par lesdits troisième et quatrième moyens (4, 5).

11. Dispositif selon l'une quelconque des revendications 9 et 10, **caractérisé en ce que** lesdits premiers moyens (2) comportent un récepteur (15) qui est monté sur le mobile et qui coopère avec un système de positionnement par satellites.

12. Dispositif selon l'une quelconque des revendications 9 à 11, **caractérisé en ce que** lesdits deuxièmes moyens (3) comportent au moins une centrale inertielle.

**Claims**

1. A method for determining the ground position of a craft, according to which method use is made of position data emitted in a periodic manner as well as inertial data, according to which method:

A/ at each emission of position data, these position data are used to determine the position of the craft; and
B/ between two successive emissions of position data, said inertial data are taken into account, and:

a) the time gap between these two successive emissions is divided into a plurality of timespans of the same duration, delimited by intermediate times;
b) at each of said intermediate times, an inertial speed of the craft is determined on the basis of the corresponding inertial data; and
d) for each intermediate time, the position of the craft is determined with the aid of said inertial data, **characterized in that**:

- the following operations are moreover performed:

B/ c) for each timespan, the average of the inertial speeds of the two intermediate times delimiting this timespan is calculated, and the ground displacement of the craft during said timespan is deduced therefrom;

- in step d), for each intermediate time, the position of the craft is determined on the basis of its position at the previous intermediate time and on the basis of its displacement during the timespan delimited by these two corresponding intermediate times, current and previous; and
- in steps B/c) and B/d), the position of the craft is determined with the aid of the following expressions:

$$
\begin{cases}
x_{i+1} = x_i + [(vx_{i+1} + vx_i).dt] \ /2 \\
y_{i+1} = y_i + [(vy_{i+1} + vy_i).dt] \ /2 \\
vx_{i+1} = vx_i + (Vx_{i+1} - Vx_i) \\
vy_{i+1} = vy_i + (Vy_{i+1} - Vy_i)
\end{cases}
$$

in which:
- $x_{i+1}$ and $y_{i+1}$ are the coordinates in a horizontal plane of said position of the craft at an intermediate time $t_{i+1}$;
- $x_i$ and $y_i$ are the coordinates in the horizontal plane of said position of the craft at a previous intermediate time $t_i$;
- $Vx_{i+1}$ and $Vy_{i+1}$ are the coordinates in the horizontal plane of the inertial speed of the craft at the intermediate time $t_{i+1}$;
- $Vx$ and $Vy$ are the coordinates in the horizontal plane of the inertial speed of the craft at the intermediate time $t_i$;
- dt is the duration of the timespan; and
- $vx_i$ and $vy_i$ are calculated speeds which are adjusted in regard to the speed of a reception antenna (17) used to generate the position data, at each emission of said position data.

2. The method as claimed in claim 1,
**characterized in that** said inertial data correspond directly to inertial speeds.

3. The method as claimed in claim 1,
**characterized in that** said inertial data correspond to accelerations making it possible to determine said inertial speeds.

4. The method as claimed in any one of the preceding claims,
**characterized in that** at each emission of position data:

- a first position of the craft is determined on the basis of the inertial data, in accordance with step B/;
- the deviation is calculated between this first position and a second position obtained with the aid of said emitted position data; and
- the position of the craft is given by:

  • said first position, if the deviation thus calculated is greater than or equal to a first predetermined value and is less than a second predetermined value; and
  • said second position, if said deviation is less than said first predetermined value.

5. The method as claimed in any one of the preceding claims,
**characterized in that** in a following step C/, a map illustrating the environment of the craft is displayed on a viewing screen (10), which map is furnished with a symbol indicating the position of said craft as determined in steps A/ and B/d).

6. The method as claimed in claim 5,
**characterized in that**:

- accuracy information relating to the accuracy of said position data are collected;
- a potential position error of the craft is determined on the basis of this accuracy information; and
- a zone illustrating said potential position error of the craft is highlighted on said map around said symbol.

7. The method as claimed in any one of the preceding claims,
   **characterized in that** said position data are data generated by a receiver (15) which is mounted on the craft and which cooperates with a satellite positioning system.

8. The method as claimed in any one of the preceding claims,
   **characterized in that** said inertial data are data generated by an inertial platform (3) of the craft.

9. An onboard device for determining the ground position of a craft, said device (1) comprising:

   - first means (2) for emitting position data in a periodic manner;
   - second means (3) for emitting inertial data;
   - third means (4) for determining the position of the craft at each emission of position data, on the basis of said position data; and
   - fourth means (5) for determining the position of the craft on the basis of the inertial data between two successive emissions of position data, the time gap between two successive emissions being divided into a plurality of timespans of the same duration separated by intermediate times, said fourth means (5) comprising means for determining, at each of said intermediate times, an inertial speed on the basis of the corresponding inertial data;
   **characterized in that** said fourth means (5) further comprise:
   - means for calculating, for each timespan, the average of the inertial speeds of the two intermediate times delimiting this timespan and for deducing therefrom the ground displacement of the craft during said corresponding timespan; and
   - means for determining, for each intermediate time, the position of the craft, on the basis of its position at the previous intermediate time and on the basis of its displacement during the timespan delimited by these two corresponding intermediate times, current and previous, with the aid of the following expressions:

$$\begin{cases} x_{i+1} = x_i + [(vx_{i+1} + vx_i).dt] /2 \\ y_{i+1} = y_i + [(vy_{i+1} + vy_i).dt] /2 \\ vx_{i+1} = vx_i + (Vx_{i+1} - Vx_i) \\ vy_{i+1} = vy_i + (Vy_{i+1} - Vy_i) \end{cases}$$

   in which:
   - $x_{i+1}$ and $y_{i+1}$ are the coordinates in a horizontal plane of said position of the craft at an intermediate time $t_{i+1}$;
   - $x_i$ and $y_i$ are the coordinates in the horizontal plane of said position of the craft at a previous intermediate time $t_i$;
   - $Vx_{i+1}$ and $Vy_{i+1}$ are the coordinates in the horizontal plane of the inertial speed of the craft at the intermediate time $t_{i+1}$;
   - $Vx$ and $Vy$ are the coordinates in the horizontal plane of the inertial speed of the craft at the intermediate time $t_i$;
   - $dt$ is the duration of the timespan; and
   - $vx_i$ and $vy_i$ are calculated speeds which are adjusted in regard to the speed of a reception antenna (17) used to generate the position data, at each emission of said position data.

10. The device as claimed in claim 9, **characterized in that** it comprises, moreover, fifth means (9) for presenting, on a viewing screen (10), a map which illustrates the environment of the craft and which is furnished with a symbol indicating the position of the craft, as determined by said third and fourth means (4, 5).

11. The device as claimed in any one of claims 9 and 10,
    **characterized in that** said first means (2) comprise a receiver (15) which is mounted on the craft and which cooperates with a satellite positioning system.

12. The device as claimed in any one of claims 9 to 11,
    **characterized in that** said second means (3) comprise at least one inertial platform.

**Patentansprüche**

1. Verfahren zum Bestimmen der Bodenposition eines Mobilelements, wobei bei diesem Verfahren periodisch gesendete Positionsdaten und Trägheitsdaten verwendet werden, wobei:

A/ bei jeder Sendung von Positionsdaten diese Positionsdaten verwendet werden, um die Position des Mobilelements zu bestimmen; und

B/ zwischen zwei aufeinanderfolgenden Sendungen von Positionsdaten die Trägheitsdaten berücksichtigt werden; und:

a) der zeitliche Raum zwischen diesen beiden aufeinanderfolgenden Sendungen in eine Vielzahl von Zeitspannen gleicher Dauer, die durch Zwischenzeitpunkte begrenzt sind, unterteilt wird;

b) zu jedem der Zwischenzeitpunkte eine Trägheitsgeschwindigkeit des Mobilelements aus den entsprechenden Trägheitsdaten bestimmt wird; und

d) für jeden Zwischenzeitpunkt die Position des Mobilelements anhand der Trägheitsdaten bestimmt wird, **dadurch gekennzeichnet, dass**

- zudem folgende Vorgänge durchgeführt werden:

B/ c) für jede Zeitspanne der Mittelwert der Trägheitsgeschwindigkeiten der beiden Zwischenzeitpunkte, die diese Zeitspanne begrenzen, berechnet wird und daraus die Bewegung des Mobilelements am Boden während der Zeitspanne abgeleitet wird;

- in Schritt d) für jeden Zwischenzeitpunkt die Position des Mobilelements aus seiner Position zu dem vorhergehenden Zwischenzeitpunkt und aus seiner Bewegung während der Zeitspanne, die durch diese beiden entsprechenden aktuellen und vorhergehenden Zwischenzeitpunkte begrenzt ist, bestimmt wird; und

- in Schritt B/ c) und B/ d) die Position des Mobilelements anhand der folgenden Ausdrücke bestimmt wird:

$$\begin{cases} x_{i+1} = x_i + \left[(vx_{i+1} + vx_i).dt\right]/2 \\ y_{i+1} = y_i + \left[(vy_{i+1} + vy_i).dt\right]/2 \\ vx_{i+1} = vx_i + (Vx_{i+1} - Vx_i) \\ vy_{i+1} = vy_i + (Vy_{i+1} - Vy_i) \end{cases}$$

wobei:
- $x_{i+1}$ und $y_{i+1}$ die Koordinaten in einer waagerechten Ebene der Position des Mobilelements zu einem Zwischenzeitpunkt $t_{i+1}$ sind;
- $x_1$ und $y_1$ die Koordinaten in der waagerechten Ebene der Position des Mobilelements zu einem vorhergehenden Zwischenzeitpunkt $t_i$ sind;
- $Vx_{i+1}$ und $Vy_{i+1}$ die Koordinaten in der waagerechten Ebene der Trägheitsgeschwindigkeit des Mobilelements zum Zwischenzeitpunkt $t_{i+1}$ sind;
- $Vx$ und $Vy$ die Koordinaten in der waagerechten Ebene der Trägheitsgeschwindigkeit des Mobilelements zum Zwischenzeitpunkt $t_i$ sind;
- $dt$ die Dauer der Zeitspanne ist; und
- $vx_i$ und $vy_i$ berechnete Geschwindigkeiten sind, die auf die Geschwindigkeit einer Empfangsantenne (17) eingestellt sind, die verwendet wird, um die Positionsdaten zu erzeugen, bei jeder Sendung der Positionsdaten.

2. Verfahren nach Anspruch 1, **dadurch gekennzeichnet, dass** die Trägheitsdaten den Trägheitsgeschwindigkeiten direkt entsprechen.

3. Verfahren nach Anspruch 1, **dadurch gekennzeichnet, dass** die Trägheitsdaten Beschleunigungen entsprechen, die es ermöglichen, die Trägheitsgeschwindigkeiten zu bestimmen.

4. Verfahren nach einem der vorhergehenden Ansprüche, **dadurch gekennzeichnet, dass** bei jeder Sendung von Positionsdaten:

- gemäß Schritt B/ eine erste Position des Mobilelements aus den Trägheitsdaten bestimmt wird;
- die Abweichung zwischen dieser ersten Position und einer zweiten Position, die anhand der gesendeten Positionsdaten erzielt wird, berechnet wird; und
- als Position des Mobilelements Folgendes verwendet wird:

die erste Position, wenn die somit berechnete Abweichung größer oder gleich einem ersten vorherbestimmten Wert ist und kleiner als ein zweiter vorherbestimmter Wert ist; und
die zweite Position, wenn die Abweichung kleiner als der erste vorherbestimmte Wert ist.

5. Verfahren nach einem der vorhergehenden Ansprüche, **dadurch gekennzeichnet, dass** in einem folgenden Schritt C/ auf einem Visualisierungsbildschirm (10) eine Karte angezeigt wird, welche die Umgebung des Mobilelements abbildet und mit einem Symbol versehen ist, das die Position des Mobilelements angibt, wie sie in Schritt A/ und B/ d) bestimmt wurde.

6. Verfahren nach Anspruch 5, **dadurch gekennzeichnet, dass**:

- Präzisionsinformationen über die Präzision der Positionsdaten gesammelt werden;
- ein möglicher Positionsfehler des Mobilelements aus diesen Präzisionsinformationen bestimmt wird; und
- auf der Karte, um das Symbol herum, ein Bereich hervorgehoben wird, der den möglichen Positionsfehler des Mobilelements abbildet.

7. Verfahren nach einem der vorhergehenden Ansprüche, **dadurch gekennzeichnet, dass** die Positionsdaten Daten sind, die von einem Empfänger (15) erzeugt werden, der auf dem Mobilelement montiert ist und der mit einem Satelliten-Positionsbestimmungssystem zusammenwirkt.

8. Verfahren nach einem der vorhergehenden Ansprüche, **dadurch gekennzeichnet, dass** die Trägheitsdaten Daten sind, die von einer Trägheitszentrale (3) des Mobilelements erzeugt werden.

9. Bordvorrichtung zum Bestimmen der Bodenposition eines Mobilelements, wobei die Vorrichtung (1) Folgendes umfasst:

- erste Mittel (2) zum periodischen Senden von Positionsdaten;
- zweite Mittel (3) zum Senden von Trägheitsdaten;
- dritte Mittel (4), um bei jeder Sendung von Positionsdaten die Position des Mobilelements aus den Positionsdaten zu bestimmen; und
- vierte Mittel (5), um die Position des Mobilelements aus den Trägheitsdaten zwischen zwei aufeinanderfolgenden Sendungen von Positionsdaten zu bestimmen, wobei der Zeitraum zwischen zwei aufeinanderfolgenden Sendungen in eine Vielzahl von Zeitspannen gleicher Dauer, die durch Zwischenzeitpunkte begrenzt sind, unterteilt ist, wobei die vierten Mittel (5) Mittel umfassen, um zu jedem der Zwischenzeitpunkte eine Trägheitsgeschwindigkeit aus den entsprechenden Trägheitsdaten zu bestimmen,
**dadurch gekennzeichnet, dass** die vierten Mittel (5) zudem Folgendes umfassen:
- Mittel, um für jede Zeitspanne den Mittelwert der Trägheitsgeschwindigkeiten der beiden Zwischenzeitpunkte, die diese Zeitspanne begrenzen, zu berechnen und um daraus die Bewegung des Mobilelements am Boden während der entsprechenden Zeitspanne abzuleiten; und
- Mittel, um für jeden Zwischenzeitpunkt die Position des Mobilelements aus seiner Position zu dem vorhergehenden Zwischenzeitpunkt und aus seiner Bewegung während der Zeitspanne, die durch diese beiden entsprechenden, aktuellen und vorhergehenden Zwischenzeitpunkten begrenzt ist, anhand der folgenden Ausdrücke zu bestimmen:

$$\begin{cases} x_{i+1} = x_i + [(vx_{i+1} + vx_i).dt]/2 \\ y_{i+1} = y_i + [(vy_{i+1} + vy_i).dt]/2 \\ vx_{i+1} = vx_i + (Vx_{i+1} - Vx_i) \\ vy_{i+1} = vy_i + (Vy_{i+1} - Vy_i) \end{cases}$$

wobei:

- $x_{i+1}$ und $y_{i+1}$ die Koordinaten in einer waagerechten Ebene der Position des Mobilelements zu einem Zwischenzeitpunkt $t_{i+1}$ sind;

- $x_1$ und $y_1$ die Koordinaten in der waagerechten Ebene der Position des Mobilelements zu einem vorhergehenden Zwischenzeitpunkt $t_i$ sind;

- $Vx_{i+1}$ und $Vy_{i+1}$ die Koordinaten in der waagerechten Ebene der Trägheitsgeschwindigkeit des Mobilelements zum Zwischenzeitpunkt $t_{i+1}$ sind;

- $Vx$ und $Vy$ die Koordinaten in der waagerechten Ebene der Trägheitsgeschwindigkeit des Mobilelements zum Zwischenzeitpunkt $t_i$ sind;

- dt die Dauer der Zeitspanne ist; und

- $vx_i$ und $vy_i$ berechnete Geschwindigkeiten sind, die auf die Geschwindigkeit einer Empfangsantenne (17) eingestellt sind, die verwendet wird, um die Positionsdaten zu erzeugen, bei jeder Sendung der Positionsdaten.

10. Vorrichtung nach Anspruch 9, **dadurch gekennzeichnet, dass** sie zudem fünfte Mittel (9) umfasst, um auf einem Visualisierungsbildschirm (10) eine Karte vorzulegen, welche die Umgebung des Mobilelements abbildet und mit einem Symbol versehen ist, das die Position des Mobilelements angibt, wie sie durch die dritten und vierten Mittel (4, 5) bestimmt wurde.

11. Vorrichtung nach einem der Ansprüche 9 und 10, **dadurch gekennzeichnet, dass** die ersten Mittel (2) einen Empfänger (15) umfassen, der auf dem Mobilelement montiert ist und mit einem Satelliten-Positionsbestimmungssystem zusammenwirkt.

12. Vorrichtung nach einem der Ansprüche 9 bis 11, **dadurch gekennzeichnet, dass** die zweiten Mittel (3) mindestens eine Trägheitszentrale umfassen.

EP 1 904 869 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. SÔHNE et al.** Integrated INS/GPS System for High Precision Navigation Applications. *Position location and navigation Symposium,* 1994, 310-313